# EUROPEAN PATENT APPLICATION

(11) **EP 2 518 103 A2**
(43) Date of publication of application: **31.10.2012**
(21) Application number: 10839659.9
(22) Date of filing: 16.08.2010
(51) Int. Cl.: C08K 3/04, C08G 73/06, C01B 31/02, C08J 3/02, C08L 79/04

(54) **GRAPHENE DISPERSION AND GRAPHENE-IONIC LIQUID POLYMER COMPOUND**

(30) Priority: 22.12.2009 KR 20090129361; 18.02.2010 KR 20100014723; 29.06.2010 KR 20100061995
(71) Applicant: Suh, Kwang Suck, Seongnam-si, Gyeonggi-do 463-810 (KR)
(72) Inventor: KIM, Jong Eun, Seoul 158-758 (KR); KIM, Tae Young, Seoul 138-905 (KR)
(74) Representative: Beck & Rössig European Patent Attorneys
(86) International application number: PCT/KR2010/005401
(87) International publication number: WO 2011/078462

(57) **Abstract**

This invention relates to a method of manufacturing a graphene dispersion, a composite of poly(ionic liquid) and graphene manufactured thereby, and a manufacturing method thereof, which can manufacture the poly(ionic liquid)-modified graphene using the graphene dispersion which is manufactured by exfoliating graphite with an ionic liquid.

## Description

### Technical Field

The present invention relates to a graphene dispersion, a graphene modified with poly(ionic liquid), and manufacturing methods thereof, and more particularly to a graphene dispersion manufactured by exfoliating graphite or graphite oxide with an ionic liquid, and a poly(ionic liquid)-modified graphene in which graphene and an ionic liquid are bound to each other, and manufacturing methods thereof.

### Background Art

Graphene or carbon nanoplates (hereinafter referred to as "graphene") indicate individual layers of graphite known to have a layered structure, and have a high charge mobility of about 20,000 ∼ 50,000 cm/Vs and a very high theoretical specific surface area of 2,630 m²/g. Thus, research into applying such graphene to electrochemical devices such as supercapacitors or electric double-layer capacitors having ultra-high capacity is ongoing

Although graphene may be directly formed on the surface of a substrate using chemical vapor deposition (CVD) (Science 3012, 1191, 2006 and Nature Materials 7, 406, 2008), it is mainly manufactured by separating individual layers of graphite so as to achieve mass production.

Conventional techniques for separating individual layers of graphite include methods of obtaining a graphene dispersion by oxidizing graphite with a strong acid into graphite oxide, which is readily exfoliated and dispersed in an aqueous solvent and then reduced chemically or thermally into graphene-like structure, methods of affording graphene by thermally treating expandable graphite at a high temperature of about 1,000°C, etc. (Carbon, 45,1558,2007, Nature Nanotechnology, 3, 101, 2008).

All of these methods separate the individual layers of graphite by weakening the interlayer bonding force of graphite. Specifically, the methods using expandable graphite are performed by heating the expandable graphite to weaken the interlayer bonding force with the formation of gaseous chemical molecules (e.g. sulphur or nitrogen compounds)intercalated between the carbon layers so that few-layered graphene flakes can be generated in solvents by sonication, and the methods using the strong acid solution may be conducted by treating graphite with strong acid so that the surface of the individual layers is modified to have oxygen groups attached thereto, whereby the state of charge ofthe individual layers may be altered, thus easily separating the individual layers. When the individual layers of graphite are separated in this way, specifically, when graphene oxide having the oxygen groups at the edges and basal plane is prepared and then reduced into electrically conductive graphene-based materials which are referred to as reduced graphene oxide

These methods enable the graphene dispersion to be directly obtained However, in the case where the solvent system is changed, specifically where an aqueous solvent should be changed to an organic solvent or vice versa, an additional complicated treatment procedure for changing the solvent system has to be performed.

These methods are problematic because heating to a high temperature of about 1,000°C or oxidation and reduction should be conducted and thus the process may become complicated, and also because considerably many defects may exist on the surface of graphene in the course of such oxidation and reduction, or the formed graphene is dispersed again in the solvent or an additional complicated procedure which changes the solvent system has to be carried out, thus making it unsuitable to achieve mass production and causing very limited applicability.

Also to separate the individual layers of graphite on large scale in order to use graphene, there have been devised a variety of methods of manufacturing graphene or a graphene dispersion in a solution known to date, including oxidation-reduction treatment including oxidizing graphite and then reducing it, preparation of graphene by exfoliation of graphite flakes in solvents with a compound such as a surfactant or the like, preparation of graphene by heating expandable graphite and exfoliation of expanded graphite in solvent favorably with a surfactant or the like, preparation of graphene by applying voltage to graphite in a electrolyte solution, etc.

The oxidation-reduction treatment is complicated because graphite is first oxidized and then reduced, but is known to manufacture a material having a structure very close to graphene which has a comparatively large area with a single layer or several layers ofnano material. Furthermore, this method is very economical because pristine graphite is used as a raw material.

The Hummer method is known as a typical method of preparing graphene using oxidation-reduction treatment, wherein pristine graphite is treated with a mixture solution of KMnO₄, H₂SO₄, HNO₃ and the like so that the surface of the individual layers of graphite is oxidized to thus couple a portion of carbon with oxygen to form a carbonyl group. This facilitates the dispersion in an aqueous solvent such as water or the like, thereby making a graphene oxide dispersion in the aqueous solvent Then, a reducing agent compound such as hydrazine or the like is added to this dispersion which is then stirred at room temperature or at a higher temperature, so that a reduction reaction takes place, resulting in graphene.

However, in such oxidation-reduction treatment, when graphene oxide is dispersed in a solvent having relatively low boiling point such as water or the like and a reducing agent such as hydrazine hydrate is used, the reaction temperature cannot be greatly increased, undesirably requiring a large amount of reducing agent or long reduction time. Moreover, after the reduction reaction, particles such as hydrazine may be left behind on the surface of graphene and thus have to be removed using washing, which is burdensome. As such, if the amount of the hydrazine-based reducing agent is increased, the reduction process may be shortened to some extent, but it is difficult to greatly increase the reduction temperature because of the low boiling point of the aqueous solvent such as water. Ultimately, the reduction time can only be shortened by a limited extent. The reduction time places a considerable restriction on the mass production of graphene, and should thus be remarkably reduced in order to achieve mass production of graphene from graphite in a short period of time.

Also, because these methods cause the graphene to re-agglomerate in the dispersion when the graphene oxide is being reduced, the specific surface area of graphene may undesirably decrease, and a dispersing agent has to be further mixed with the graphene dispersion, which is regarded as burdensome.

Therefore, a method of manufacturing a novel composite of graphene and poly(ionic liquid) must be developed which can solve the above problems and is very compatible with a variety of electrolytes including ionic liquids.

### Disclosure

### Technical Problem

Accordingly, the present invention has been made keeping in mind the above problems encountered in the related art, and an object of the present invention is to provide a graphene dispersion manufactured by exfoliating and dispersing graphite in dispersing media with an ionic liquid, a method of manufacturing the graphene dispersion, a composite of poly(ionic liquid) and graphene manufactured thereby and a manufacturing method thereof, in which upon manufacturing the graphene dispersion, when the ionic liquid is a monomer, it may be polymerized before being used, or when the ionic liquid is a polymer, it may be used as it is, making it possible to manufacture a composite of poly(ionic liquid) and graphene.

### Technical Solution

In order to accomplish the above objects, the present invention provides a graphene dispersion obtained by exfoliating and dispersing graphite in dispersing media with an ionic liquid.

Also the present invention provides a poly(ionic liquid)-modified graphene in which the ionic liquid polymer is bound to graphene resulting from graphite.

The graphite may be pristine graphite, graphite subjected to oxidation-reduction treatment, graphite subjected to thermal treatment at high temperature, or graphite subjected to a combination of these treatments.

As such, exfoliating may be performed using stirring, and the ionic liquid may be provided in the form of a monomer or a polymer as a compound composed of a combination of cation and anion components, and these components may be used alone or in mixtures of two or more thereof

The ionic liquid may include either one or both of a cation and an anion, the cation being any one selected from the following group represented by Formula 1 below: 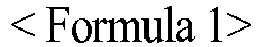 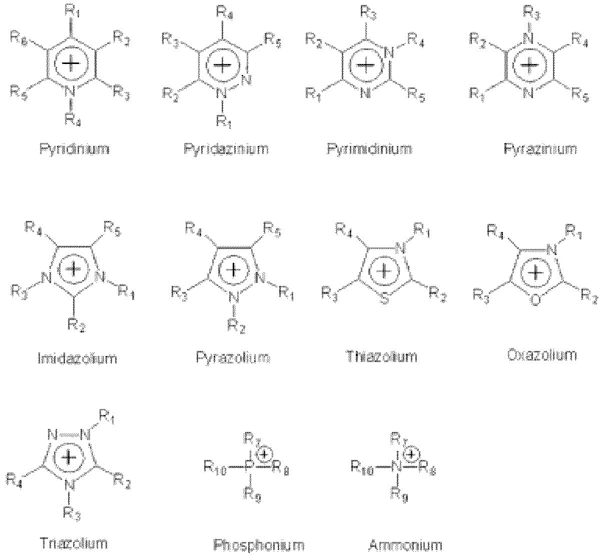 (wherein R₁ to R₁₀ are independently any one selected from among i) hydrogen, ii) halogen and iii) C₁-C₂₅ alkyl, alkenyl, alkynyl, benzyl, and phenyl, which may contain a heterogeneous element including O, N, Si and/or S, and may optionally contain Cl, Br, F, I, OH, NH₂ and/or SH), and the anion being any one selected from among [CH₃CO₂]⁻, [HSO₄]⁻, [CH₃OSO₃]⁻, [C₂H₅OSO₃]⁻, [AlCl₄]⁻, [CO₃]₂⁻, [HCO₃]⁻, [NO₂]⁻, [NO₃]⁻, [SO₄]₂⁻, [PO₄]₃⁻, [HPO₄]₂⁻, [H₂PO₄]⁻, [HSO₃]⁻, [CuCl₂]⁻, Cl⁻, Br⁻, I⁻, [BF₄]⁻, [PF₆]⁻, [SbF₆]⁻, [CF₃SO₃]⁻, [HCF₂CF₂SO₃]⁻, [CF₃HFCCF₂SO₃]⁻, [HCClFCF₂SO₃]⁻, [(CF₃SO₂)₂N]⁻, [(CF₃CF₂SO₂)₂N]⁻, [(CF₃SO₂)₃C]⁻, [CF₃CO₂]⁻, [CF₃OCFHCF₂SO₃]⁻, [CF₃CF₂OCFHCF₂SO₃]⁻ and [CF₃CFHOCF₂CF₂SO₃]⁻.

The ionic liquid polymer may have a molecular weight of 1,000 ∼ 2,000,000 g/mol.

A polymerization initiator may be added to the dispersion, so that the ionic liquid is polymerized.

The anion component of the ionic liquid of the dispersion may be ion-exchanged to change a solvent system.

In order to facilitate the ion exchange of the anion component of the ionic liquid, a solvent such as propylene carbonate, 1-methylpyrrolidone, dimethylformamide, acetonitrile, nitromethane, acetone or tetrahydrofuran may be further added to a graphene dispersion product in a gel phase to decrease the viscosity of the product

The ionic liquid may be added in an amount of 1 part by weight or more when the amount of graphene oxide is 1 part by weight.

A poly(ionic liquid)-modified graphene may be manufactured, in which, in the manufacturing of the graphene dispersion, when the ionic liquid is a monomer, it may be polymerized before use, or when the ionic liquid is a polymer, it may be used as it is.

The poly(ionic liquid)-modified graphene may include 5∼95 wt% of graphene and 5∼95 wt% of the ionic liquid polymer.

The polymerization initiator for polymerizing the ionic liquid may be one or more selected from among 2,2-azobisisobutyronitrile (AIBN), 1,1-azobiscyclohexanecarbonitirle (ABCN) and benzoyl peroxide (BP).

The amount of the polymerization initiator used may be 0.1 ∼ 3 parts by weight based on 100 parts by weight of the ionic liquid.

The poly(ionic liquid)-modified graphene may further include one or more selected from among a binder, a carbon material, metal particles and an electrical conductive polymer.

The binder may be any one selected from among polyperfluorosulfonic acid, polytetrafluoroethylene and a polyvinylidene fluoride copolymer, the carbon material may be one or more selected from among activated carbon, graphite, carbon black, carbon nanotubes and fullerene, and the electrical conductive polymer may be one or more selected from among polyaniline, polypyrrole, polythiophene and derivatives thereof.

The poly(ionic liquid)-modified graphene may be manufactured, in which, in the manufacturing of the graphene dispersion, when the ionic liquid is a monomer, it may be polymerized before use, or when the ionic liquid is a polymer, it may be used as it is.

### Advantageous Effects

According to the present invention, a graphene dispersion can be manufactured by exfoliating graphite in an ionic liquid. Upon manufacturing the graphene dispersion, when the ionic liquid is a monomer, it is polymerized before use, or when the ionic liquid is a polymer, it is used as it is, making it possible to manufacture a poly(ionic liquid)-modified graphene.

Also, the graphene dispersion can be easily obtained by adding graphite to the dispersing media with an ionic liquid at room temperature, and a poly(ionic liquid)-modified graphene can be created from the graphene dispersion. When the anion component of the ionic liquid is replaced using ion exchange, the solvent system can be easily changed.

Also, the period of time required to reduce graphene oxide can be shortened, and aggregated particles are not left behind after a reduction process. Accordingly, when the reduction process of the present invention is applied, pure graphene dispersion and poly(ionic liquid)-modified graphene can be manufactured, and as well, the reduction time, that is, the manufacturing time can be shortened, thus enabling mass production of the graphene dispersion and the poly(ionic liquid)-modified graphene.

Also, graphene oxide is mixed with an ionic liquid polymer, or a reduction process is performed using an ionic liquid monomer and then a polymerization initiator for polymerizing the ionic liquid monomer is added at an appropriate point of time and heated, whereby the ionic liquid is polymerized and thus a poly(ionic liquid)-modified graphene can be simply manufactured without requiring additional treatment procedures.

Also the graphene dispersion and the poly(ionic liquid)-modified graphene according to the present invention can facilitate changes in the surface state of graphene using the ionic liquid, specifically, changes in hydrophilicity and hydrophobicity.

The poly(ionic liquid)-modified graphene according to the present invention can be utilized in fields requiring graphene, and can be particularly employed as electrode materials of electrochemical devices, including batteries, fuel cells, capacitors or devices formed of a combination thereof, supercapacitors, ultracapacitors, electric double-layer capacitors or the like.

### Description of Drawings

FIG. 1 illustrates a transmission electron microscope (TEM) image of graphene manufactured using an ionic liquid of Example 1;
FIGS. 2 and 3 illustrate TEM images of a poly(ionic liquid)-modified graphene manufactured using an ionic liquid of Example 3;
FIG. 4 illustrates an atomic force microscope (AFM) image and a graph of the poly(ionic liquid)-modified graphene manufactured using the ionic liquid of Example 3; and
FIG. 5 illustrates a scanning electron microscope (SEM) image of a poly(ionic liquid)-modified graphene of Example 13.

### Mode for Invention

According to the present invention, manufacturing a graphene dispersion is very simple, namely, only a stirring process may be used to exfoliate graphite in an ionic liquid. As such, the ionic liquid may be used as it is, or may be combined with a polymerization initiator and then heated to make an ionic liquid polymer, resulting in a graphene dispersion having superior dispersion stability. Then, when the graphene dispersion is dried to remove the solvent, graphene particles may be obtained, and in order to change a solvent system, the anion component of the ionic liquid may be ion exchanged with a desired anion. As such, the resulting graphene particles are poly(ionic liquid)-modified graphenes in which the ionic liquid is bound to the surface of graphene.

Hereinafter, embodiments of the present invention are described in detail with reference to the appended drawings.

A method of manufacturing the graphene dispersion according to the present invention is very simple, wherein graphite is exfoliated in an ionic liquid by stirring.

The ionic liquid may be used as it is, or may be combined with a polymerization initiator and then heated to produce an ionic liquid polymer, resulting in a graphene dispersion having superior dispersion stability. As such, the anion component of the ionic liquid may be ion exchanged with a desired anion to change the solvent system The obtained graphene particles are poly(ionic liquid)-modified graphenes in the form ofthe ionic liquid being bound to the surface of graphene.

In the present invention, either graphite itself or graphite pretreated to aid the separation of layers may be used. Typical pretreatment for the separation of layers may include a process of subjecting graphite to acid treatment in an aqueous solution of nitric acid and sulfuric acid, a process of heating graphite to high temperature (e.g. 1,000°C) to expand graphite, or combinations thereof

In the present invention, the ionic liquid is provided in the form of a monomer or a polymer as a compound composed of a combination of cation and anion components, and these components may be used separately or in mixtures thereof Examples of the cation of the ionic liquid of the present invention are represented by Formula 1 below.

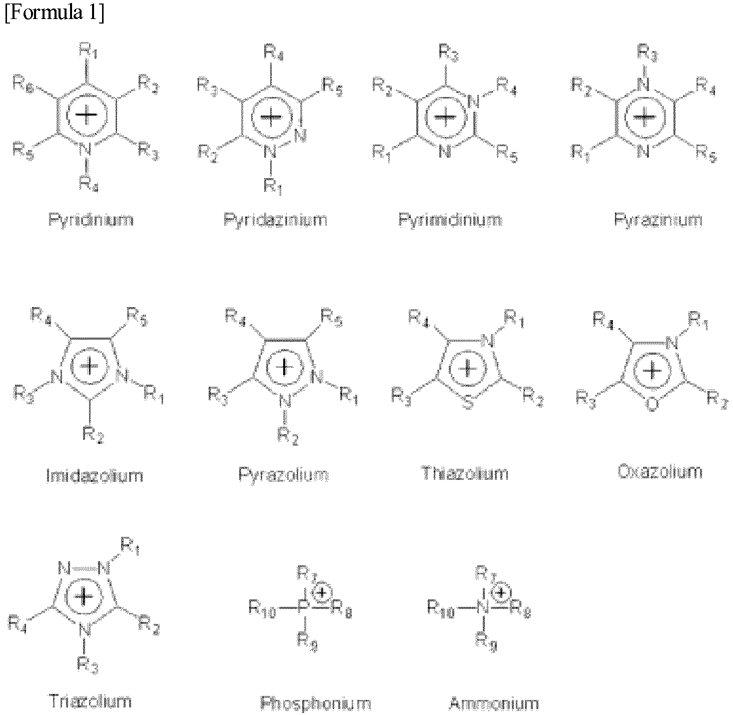

In Formula 1, R₁ to R₁₀ are independently any one selected from among i) hydrogen, ii) halogen and iii) C₁-C₂₅ alkyl, alkenyl, alkynyl, benzyl, and phenyl, which may contain a heterogeneous element including O, N, Si and/or S, and may optionally contain Cl, Br, F, I, OH, NH₂ and/or SH.

The anion of the ionic liquid polymer is not particularly limited as long as it is a compound composed of inorganics or inorganic elements, and specific examples thereof include [CH₃CO₂]⁻, [HSO₄]⁻, [CH₃OSO₃]⁻, [C₂H₅OSO₃]⁻, [AlCl₄]⁻, [CO₃]₂⁻, [HCO₃]⁻, [NO₂]⁻, [NO₃]⁻, [SO₄]₂⁻, [PO₄]₃⁻, [HPO₄]₂⁻, [H₂PO₄]⁻, [HSO₃]⁻, [CuCl₂]⁻, Cl⁻, Br⁻, I⁻, [BF₄]⁻, [PF₆]⁻, [SbF₆]⁻, [CF₃SO₃]⁻, [HCF₂CF₂SO₃]⁻, [CF₃HFCCF₂SO₃]⁻, [HCClFCF₂SO₃]⁻, [(CF₃SO₂)₂N]⁻, [(CF₃CF₂SO₂)₂N]⁻, [(CF₃SO₂)₃C]⁻, [CF₃CO₂]⁻, [CF₃OCFHCF₂SO₃]⁻, [CF₃CF₂OCFHCF₂SO₃]⁻ and [CF₃CFHOCF₂CF₂SO₃]⁻.

As such, the amount of the ionic liquid, which is used as an accelerant of a reduction reaction and as a dispersant of graphene oxide, equals to or more than the weight of graphene oxide. If the amount of the ionic liquid is less than the above lower limit, reduction is possible but a considerably long period of time is required to re-disperse the reduced graphene or the reduced graphene may precipitate into particles and thus cannot be re-dispersed. However, the maximum amount of the ionic liquid is not particularly limited. This is because not only the reduction but also the re-dispersion ofthe reduced graphene are good under conditions of the amount of the ionic liquid being equal to or more than the weight of graphene, specifically, the amount of the ionic liquid being 1 part by weight or more when the amount of graphene oxide is set to 1.

The graphene dispersion thus obtained is centrifuged to remove large particulate graphite lumps.

A method of changing the solvent using expandable graphite is described below.

Specifically, expandable graphite is thermally treated at high temperature, and is preferably thermally treated at about 600 ∼ 1,200°C for 10 ∼ 300 sec. The expandable graphite thus thermally treated is preferably exfoliated or dispersed in an ionic liquid As such, expandable graphite may be dispersed in the ionic liquid simply using stirring

When a polymerization initiator is added to the graphene dispersion to polymerize the ionic liquid, a graphene dispersion having very good dispersion stability may be obtained The initiator for polymerizing the ionic liquid to prepare an ionic liquid polymer may include 2,2-azobisisobutyronitrile (AIBN), 1,1'-azobiscyclohexanecarbonitrile (ABCN), benzoyl peroxide (BP), etc. The amount of the polymerization initiator is set in the range of 0.1 - 3 parts by weight based on the amount of the ionic liquid, and the polymerization reaction is carried out at 50 ∼ 80°C for about 5 ∼ 72 hr.

If the amount of the polymerization initiator used in the reaction, the reaction temperature and the reaction time are less than the above lower limits, the reaction rate may be too low or the reaction does not proceed well, making it difficult to carry out the polymerization. In contrast, if these exceed the above upper limits, the ionic liquid polymer may deteriorate or the solvent may excessively evaporate because the amount of the initiator is unnecessarily large, the reaction time is long or the reaction temperature is very high.

The reaction conditions are controlled so that the molecular weight of a final ionic liquid polymer falls in the range of 1,000 ∼ 2,000,000 g/mol. If the molecular weight thereof is below 1,000 g/mol, long-term stability of the graphene dispersion may become poor. In contrast, if the molecular weight thereofis greater than 2,000,000 g/mol, the molecular weight may be too high and thus solubility may undesirably decrease.

The graphene dispersion manufactured by the above method disperses well in an organic solvent. As such, examples of the anion that can facilitate good dispersion of the ionic liquid in the organic solvent include [BF₄]⁻, [PF₆]⁻, [SbF₆]⁻, [CF₃SO₃]⁻, [HCF₂CF₂SO₃]⁻, [CF₃HFCCF₂SO₃]⁻, [HCClFCF₂SO₃]⁻, [(CF₃SO₂)₂N]⁻, [(CF₃CF₂SO₂)₂N]⁻, [(CF₃SO₂)₃C]⁻, [CF₃CO₂]⁻, [CF₃OCFHCF₂SO₃]⁻, [CF₃CF₂OCFHCF₂SO₃]⁻ and [CF₃CFHOCF₂CF₂SO₃]⁻.

To change the solvent of the graphene solution dispersed in the organic solvent, the anion component of the ionic liquid may be replaced, whereby graphene may be well dispersed in water or an aqueous solvent.

When graphite is placed in the ionic liquid and stirred as mentioned above, a graphene dispersion in which the graphene is dispersed in the ionic liquid is obtained The polymerization initiator is added to this solution to polymerize the ionic polymer, so that a graphene dispersion in a gel phase is obtained while increasing the viscosity.

The graphene dispersion in a gel phase may be very efficiently dispersed in a polar organic solvent such as propylene carbonate, 1-methylpyrrolidone, dimethylformamide, acetonitrile, nitromethane, acetone or tetrahydrofuran, affording a graphene solution uniformly dispersed in the organic solvent.

A method of obtaining a graphene aqueous dispersion from the dispersed graphene solution includes exchanging the anion of the ionic liquid of the solution with an anion favorable for aqueous dispersion. For example, the graphene dispersion which is in a gel phase through polymerization or which further includes the organic solvent is added with a compound having a bromine group such as tetrabutylammonium bromide or tetrabutylphosphonium bromide, so that the anion component of the ionic liquid polymer around the graphene is replaced with the bromine group (an ion exchange reaction).

While the poly(ionic liquid)-modified graphene having the replaced bromide anion is dispersed in an aqueous solvent, graphene may precipitate. Washing and then re-dispersing this precipitate in the aqueous solvent may result in uniform graphene dispersion in the aqueous solvent

In particular, to facilitate ion exchange with tetrabutylammonium bromide or tetrabutylphosphonium bromide, the product in a gel phase resulting from primary polymerization may be further added with a solvent such as propylene carbonate, 1-methylpyrrolidone, dimethylformamide, acetonitrile, nitromethane, acetone, tetrahydrofuran, etc. so that the viscosity thereof may decrease, whereby an anion exchange reaction using tetraammonium bromide may be more readily carried out.

Because tetrabutylammonium bromide or tetrabutylphosphonium bromide is a solid at room temperature, such a bromide compound may be more effectively used after being previously dissolved in a solvent such as propylene carbonate, 1-methylpyrrolidone, dimethylformamide, acetonitrile, nitromethane, acetone, tetrahydrofuran, etc.

On the other hand, graphene which has been subjected to oxidation and reduction mainly disperses well in the aqueous solvent which allows a graphene aqueous dispersion to be obtained. Although the graphene aqueous dispersion is stable for a considerable period of time at room temperature, graphene particles may consequently undesirably precipitate after a long period of time. When the ionic liquid polymer is added to the graphene aqueous dispersion, dispersion stability is remarkably improved, and thus graphene does not precipitate even after having been allowed to stand for a long period of time.

The ionic liquid polymer used herein is obtained by polymerizing ionic liquid molecules having an anion dissolvable in the aqueous solvent using the polymerization initiator, and may have a molecular weight of 1,000 ∼ 2,000,000 g/mol.

If the molecular weight thereof is below 1,000 g/mol, the molecular weight of the ionic liquid is low and thus there is little dispersion stability. In contrast, if the molecular weight thereof is greater than 2,000,000 g/mol, the molecular weight is too large, making it difficult to dissolve this component in the aqueous solvent. In this case, the anion of the ionic liquid may include [CH₃CO₂]⁻, [HSO₄]⁻, [CH₃OSO₃]⁻, [C₂H₅OSO₃]⁻, [AlCl₄]⁻, [CO₃]₂⁻, [HCO₃]⁻, [NO₂]⁻, [NO₃]⁻, [SO₄]₂⁻, [PO₄]₃⁻, [HPO₄]₂⁻, [H₂PO₄]⁻, [HSO₃]⁻, [CuCl₂]⁻, Cl⁻, Br⁻, I⁻, etc.

The following examples will describe the aforementioned contents in more detail. However, the scope of the present invention is not limited to these examples.

### <Example 1>

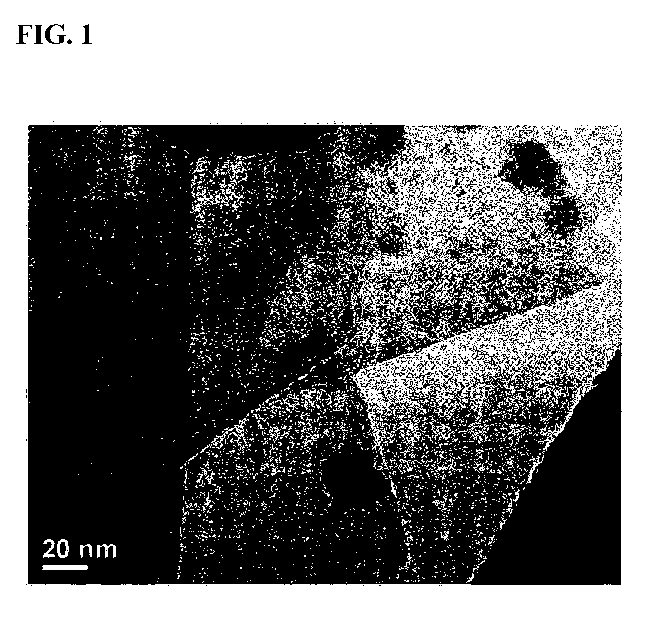

1 mg of expandable graphite which had been thermally treated at 1,000°C for 1 min was added to 3 g of an ionic liquid of 1-butyl-3-methyfimidazolium hexafluorophosphate, and stirred at 800 rpm for 20 min. Thereby a dark gray-colored ionic liquid dispersion was obtained A portion of this sample was observed using TEM. The results were that graphene was separated in the form of a monolayer as illustrated in FIG. 1.

### <Example 2>

1 mg of expandable graphite which had been thermally treated at 1,000°C for 1 min was added to 3 g of an ionic liquid of 1-vinyl-3-ethylimidazolium trifluoromethylsulfonylimide and stirred at 700 rpm, thus obtaining a graphene dispersion. Subsequently, this graphene dispersion was added with 0.03 g of 2,2-azobisisobutyronitrile (AIBN) as a polymerization initiator and reacted at 65°C for 6 hr, thereby polymerizing the ionic liquid The resulting graphene dispersion gelled, to which 20 g of propylene carbonate was then further added followed with stirring, thereby obtaining a dark gray-colored graphene dispersion, which is a solution in which graphene is uniformly dispersed in the organic solvent.

### <Example 3>

Example 3 pertains to a graphene dispersion stabilized with an ionic liquid polymer via oxidation and reduction, and the detailed preparation thereof is described below.

Specifically, 5 g of graphite was reacted in a solution containing 25 g of KMnO₄, 3.75 g of NaNO₃ and 170 ml of H₂SO₄ with stirring, thus preparing graphite oxide which was then stirred in water for 30 min and centrifuged, thereby obtaining a yellow-colored graphene oxide aqueous dispersion. 19 ml of the graphene oxide aqueous dispersion was mixed with 400 mg of poly(1-vinyl-3-ethylimidazolium)bromide as an ionic liquid polymer and stirred, yielding a graphene oxide aqueous dispersion stabilized with the ionic liquid polymer.

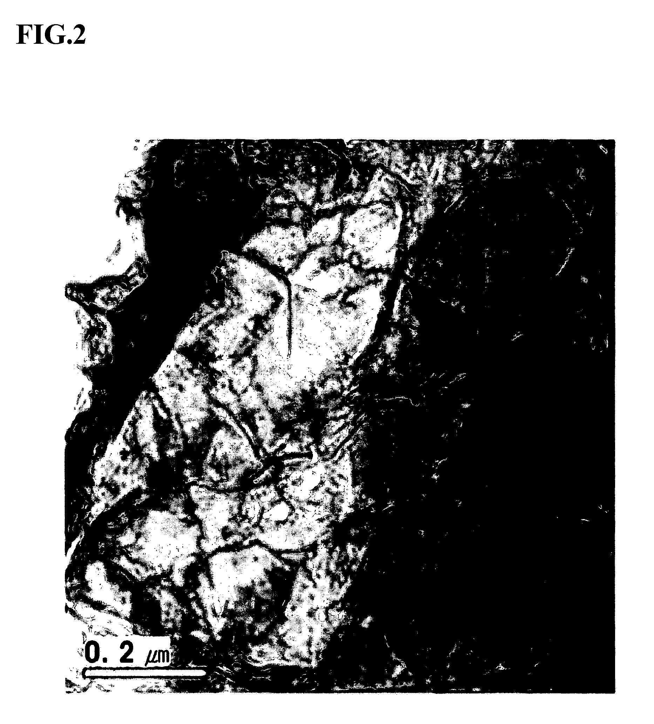

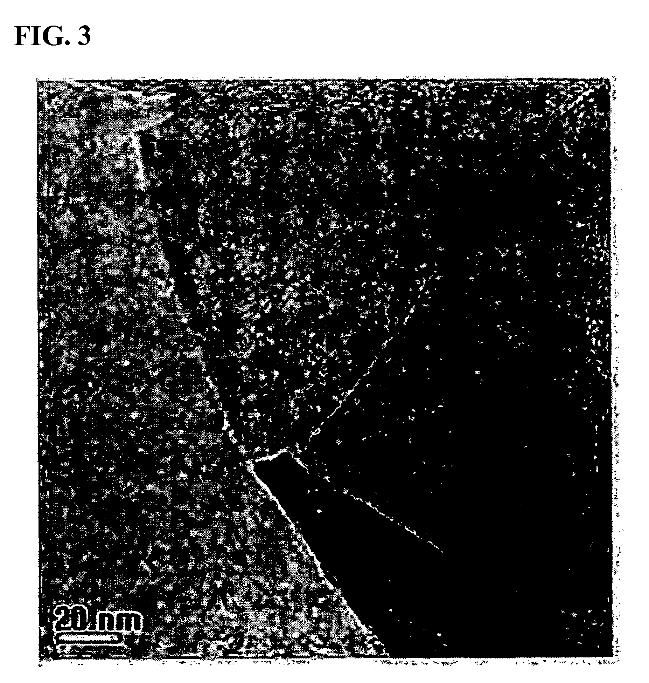

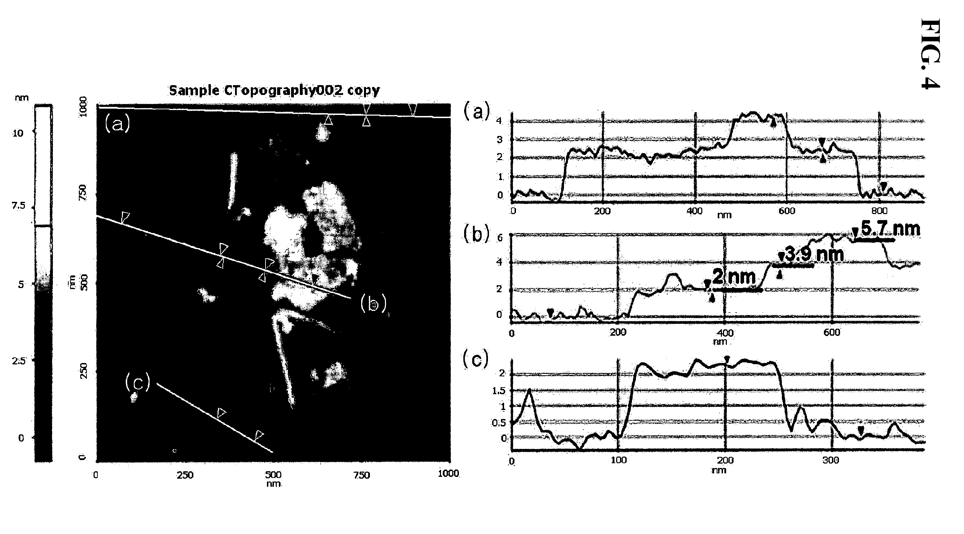

Subsequently, 3.2 mmol hydrazine was added so that a reduction reaction was carried out at about 90°C for 1 hr, whereby the graphene aqueous dispersion stabilized with the ionic liquid polymer could be obtained while the color of the solution was changed from yellow to black. Even when the graphene aqueous dispersion was allowed to stand for 5 months or longer, it was stable to the extent that it did not precipitate. A portion of this sample was observed with TEM. The results were that agglomerating did not occur and a poly(ionic liquid)-modified graphene was present in the form of being separated in a monolayer, as illustrated in FIGS. 2 and 3. FIGS. 2 and 3 illustrate the images of the same sample at different magnifications. Furthermore, a portion of this solution sample which was the graphene dispersion in water was observed with AFM. The results are illustrated in FIG. 4. As seen in the AFM image and the thickness profile of FIG. 4, the sample was confirmed to be the poly(ionic liquid)-modified graphene having a height of about 1∼2 nm.

### <Example 4>

Example 4 pertains to conversion of the graphene dispersion of Example 2 into an aqueous dispersion using ion exchange.
20 g of the graphene dispersion of Example 2 was mixed with 3.6 g of tetrabutylammonium bromide and stirred for 10 min, so that a dark gray-colored precipitate was formed. This precipitate was dried and re-dispersed in water, thus obtaining aqueous dispersed graphene.

A poly(ionic liquid)-modified graphene may be prepared with the polymerization of a ionic liquid monomer or with an ionic liquid polymer.

As such, when the ionic liquid monomer is used, the cation of the monomer contains a functional group that is able to induce the polymerization reaction and the anion of the monomer contains [BF₄]⁻, [PF₆]⁻,[CF₃SO₂)₂N]⁻ or [(CF₃CF₂SO₂)₂N]⁻ in order to effectively separate the poly(ionic liquid)-modified graphene. Such an ionic liquid monomer is reacted with a polymerization initiator used to polymerize the ionic liquid after the reduction reaction, thereby polymerizing the ionic liquid, resulting in the poly(ionic liquid)-modified graphene. As such, the poly(ionic liquid)-modified graphene means a material including graphene and an ionic liquid polymer.

The initiator used to polymerize the ionic liquid may be one or more selected from among 2,2-azobisisobutyronitrile (AIBN), 1,1-azobiscyclohexanecarbonitrile (ABCN) and benzoyl peroxide (BP). The amount of the polymerization initiator may be in the range of 0.1 ∼ 3 parts by weight based on 100 parts by weight of the ionic liquid, and the polymerization reaction may be carried out at 50 ∼ 80°C for about 5 ∼ 72 hr. If the amount of the initiator used in the reaction, the reaction temperature and the reaction time are less than the above lower limits, the reaction rate may be too slow or the reaction does not proceed well, making it difficult to perform the polymerization. In contrast, if these exceed the above upper limits, the ionic liquid polymer may deteriorate or the solvent may excessively evaporate because the amount of the initiator is unnecessarily large, the reaction time is long or the reaction temperature is very high.

Instead of reducing the graphene oxide using the ionic liquid and then adding a polymerization initiator to carry out polymerization as mentioned above, graphene oxide may be reduced using an ionic liquid polymer which was already polymerized. Specifically, oxidized graphene is added to a solvent such as propylene carbonate or the like and an ionic liquid polymer is further added thereto, followed by performing heating to 100°C or higher so that a reduction reaction occurs. As such, the ionic liquid polymer is bound to graphene so that graphene is made stable, whereby graphene is prevented from re-agglomerating during the reduction reaction.

The method using the ionic liquid polymer is much more effective because the poly(ionic liquid)-modified graphene may be directly manufactured while the reduction reaction is carried out without the need for additional polymerization after that. Briefly, the ionic liquid polymer is coupled with the graphene during the reduction, spontaneously yielding the poly(ionic liquid)-modified graphene.

Both of these two methods can manufacture the poly(ionic liquid)-modified graphene. As such, the weight average molecular weight of the ionic liquid polymer of the poly(ionic liquid)-modified graphene is preferably controlled to fall in the range of 1,000 ∼ 2,000,000 g/mol. If the molecular weight thereof is below 1,000 g/mol, long-term stability of the graphene dispersion may become poor. In contrast, if the molecular weight thereof is greater than 2,000,000 g/mol, the solubility may undesirably decrease because of the molecular weight being too high.

Also in the poly(ionic liquid)-modified graphene according to the present invention, the anion bound to the ionic liquid polymer may be exchanged by a typical anion exchange reaction, thus easily changing compatibility with an aqueous electrolyte, an organic solvent electrolyte or an ionic liquid electrolyte. For example, in the case where Cl⁻, Br⁻, [NO₃]⁻ or [CH₃SO₄]⁻ is bound as the anion of the ionic liquid polymer of the poly(ionic liquid)-modified graphene, compatibility with an aqueous electrolyte is high. When this is subjected to anion exchange so that [BF₄]⁻, [PF₆]⁻, [CF₃SO₂)₂N]⁻ or [(CF₃CF₂SO₂)₂N]⁻ is bound, compatibility with an organic solvent electrolyte may become superior.

The poly(ionic liquid)-modified graphene according to the present invention is obtained in the form of a slurry via a procedure such as filtering or the like, and may then be dried and processed in the form of a powder or in other forms.

The following examples will provide a more detailed description ofthe aforementioned contents. However, the scope of the present invention is not limited to these examples.

### <Comparative Example 1>

Graphite (SP-1, available from Bay Carbon) was subjected to acid treatment using the Hummer method (Hummers W, Offeman R., "Preparation of graphite oxide", Jounal of the American Chemical Society, 80, 1958, 1339), thus preparing graphite oxide. Then, the graphite oxide thus prepared was stirred for about 1 hr using propylene carbonate as a solvent, thereby obtaining an organic solvent dispersion in which 1.0 mg/ml graphene oxide was dispersed.

As this graphene oxide dispersion was stirred at about 150°C for about 12 hr, a black-colored poly(ionic liquid)-modified graphene was seen to be manufactured while graphene oxide was reduced Also it was seen that graphene agglomerated in the solution during the reduction, and graphene precipitated after completion of the reduction.

In the reduction reaction of graphene oxide using heat as mentioned above, electrical resistance of the poly(ionic liquid)-modified graphene sample depending on the reduction time was measured using a standard four-point probe method (CMT series, Jandel Probe). When the electrical resistance was so low that it could not be measured using the four-point probe method, a two-point probe method was utilized. In the case where the reduction time values were 0, 0.5, 1, 2, 6, and 12 hr, the electrical resistance values that were measured were > 10¹², 10¹⁰, 10⁹, 10⁶, 10⁵, and 10³ Ohm/sq, respectively. In order to obtain the poly(ionic liquid)-modified graphene having electrical resistance of 10³ Ohm/sq using typical heat reduction in the above comparative example, the reduction time of about 12 hr was required.

### <Example 5>

Graphite (SP-1, available from Bay Carbon Inc.) was subjected to acid treatment using the Hummer method (Hummers W, Offeman R., "Preparation of graphite oxide", Journal of the American Chemical Society, 80, 1958, 1339), thus preparing graphite oxide. Then, the graphite oxide thus prepared was stirred for about 1 hr using propylene carbonate as a solvent, thus obtaining an organic solvent dispersion in which 1.0 mg/ml graphene oxide was dispersed.

20 ml of the graphene oxide dispersion was mixed with 70 mg of an ionic liquid of 1-butyl-3-methylimidazolium bis(trifluoromethyl)sulfonylamide and then stirred at about 150°C. In this case, while the color of the reaction solution was changed to black about 0.5 hr after initiation of the reduction, the progress of the reduction reaction could be observed. Also after the reduction reaction, the graphene dispersion in which graphene did not precipitate and was stably dispersed could be manufactured After carrying out the reduction reaction for about 1 hr, the solution was filtered using filter paper, and the electrical resistance of the poly(ionic liquid)-modified graphene left behind on the filter paper was measured to be 10³ Ohm/sq, from which the graphene oxide was evaluated to be rapidly reduced.

### <Example 6>

Examples 6 was made in the same manner as was Example 5, with the exception that the graphene oxide organic solvent dispersion was mixed with 70 mg of 1-octyl-3-methylimidazofium bis(trifluoromethyl)sulfonylamide as an ionic liquid Also in Example 6, the poly(ionic liquid)-modified graphene did not precipitate after the reduction reaction, and the reduction reaction rapidly progressed within about 1 hr, thus manufacturing a poly(ionic liquid)-modified graphene having electrical resistance of 10³ Ohm/sq.

### <Example 7>

Examples 7 was made in the same manner as in Example 5, with the exception that 70 mg of 1-butyl-3-methylpyrrofidinium bis(trifluoromethyl)sulfonylamide was used as the ionic liquid Also in Example 7, the poly(ionic liquid)-modified graphene did not precipitate after the reduction reaction, and the reduction reaction rapidly progressed within about 1 hr, thus manufacturing a poly(ionic liquid)-modified graphene having electrical resistance of 10³ Ohm/sq.

### <Example 8>

Examples 8 was made in the same manner as was Example 3, with the exception that 70 mg of 1-butyl-3-methylpyrrofidinium bis(trifluoromethyl)sulfonylamide was used as an ionic liquid and the temperature of the reduction reaction was adjusted to 200°C. Also in Example 3, the reduction reaction progressed within about 0.5 hr, and the electrical resistance was determined to be about 10³ Ohm/sq.

### <Comparative Example 2>

Comparative Example 2 was made in the same manner as was Example 5, with the exception that 15 mg of 1-butyl-3-methylimidazolium bis(trifluoromethyl)sulfonylamide was used as an ionic liquid. Also in Comparative Example 2, a poly(ionic liquid)-modified graphene having electrical resistance of 10³ Ohm/sq was manufactured under the conditions of a reduction time of 2 hr, but during the reduction reaction, the poly(ionic liquid)-modified graphene agglomerated in the solution.

### <Example 9>

A graphene dispersion was manufactured as in Example 9 using 70 mg of 1-vinyl-3-ethylimidazolium bis(trifluoromethyl)sulfonylamideas an ionic liquid and by performing stirring at about 150°C for 1 hr. This graphene dispersion was added with about 2 wt% of 2,2-azobisisobutyronitrile (AIBN) as a polymerization initiator based on the amount of the ionic liquid, and reacted at 65°C for 6 hr, thus polymerizing the ionic liquid, resulting in a poly(ionic liquid)-modified graphene. The poly(ionic liquid)-modified graphene was filtered and dried, and the electrical resistance thereof was measured to be 10⁴ Ohm/sq.

### <Example 10>

In Example 10, the graphite oxide of Example 1 was directly added to an ionic liquid of 1-ethyl-3-methylimidazolium bis(trifluoromethyl)sulfonylamide and stirred for 1 hr, thus obtaining a solution in which 1.0 mg/ml graphene oxide was dispersed in the ionic liquid. As the graphene oxide dispersion was stirred at about 300°C, the reduction reaction progressed while the color of the reaction solution changed to black within about 10 min. The electrical resistance of the reaction solution was measured to be 10⁴ Ohm/sq, from which the graphene oxide was evaluated to be rapidly reduced.

### <Example 11>

In Example 11, an ionic liquid of 1-vinyl-3-ethylimidazofium bis(trifluoromethyl)sulfonylamide was polymerized and thus poly(1-vinyl-3-ethylimidazolium) bis(trifluoromethyl)sulfonylamide was first prepared and then added to a graphene oxide dispersion to induce a reduction reaction.

In order to polymerize the ionic liquid, about 5 wt% of 1-vinyl-3-ethylimidazolium bis(trifluoromethyl) sulfonylamide was dissolved in dimethylformamide (DMF), after which 2,2-azobisisobutyronitrile (AIBN) as a polymerization initiator was added in an amount of about 2 wt% based on the amount of the ionic liquid, and the reaction was carried out at 65°C for 6 hr thus preparing polo(1-vinyl-3-ethylimidazolium) bis(trifluoromethyl)sulfonylamide which was then dried.

100 mg of the poly(1-vinyl-3-ethylimidazolium) bis(trifluoromethyl)sulfonylamide thus obtained was added to the graphene oxide dispersion in propylene carbonate, and the reduction reaction was carried out at about 150°C for 1 hr, thereby forming a poly(ionic liquid)-modified graphene. This poly(ionic liquid)-modified graphene was filtered and dried, and the electrical resistance thereof was measured to be 10⁴ Ohm/sq.

The method of manufacturing the poly(ionic liquid)-modified graphene according to the present invention is specified below.
(i) The poly(ionic liquid)-modified graphene is manufactured by oxidizing pristine graphite thus obtaining graphene oxide the individual layers of which are separated, mixing the graphene oxide with an ionic liquid polymer to form a graphene oxide-ionic liquid polymer, and reducing the graphene oxide using a reducing agent or heat.
(ii) The poly(ionic liquid)-modified graphene is manufactured by thermally treating at high temperature, expandable graphite in which an acid is intercalated between individual layers of graphite, microwave-treating intercalated graphite in which an alkali metal is intercalated between individual layers of graphite, or electrochemically treating graphite, followed by dispersing the treated graphite in an ionic liquid monomer thus forming a graphene-ionic liquid monomer, and then polymerizing the ionic liquid monomer.

Specifically, the method of (i) as above to manufacture the poly(ionic liquid)-modified graphene is described below. According to the Hummer method, pristine graphite is oxidized using a mixture solution of KMnO₄, H₂SO₄, HNO₃ and the like, and is then dispersed in water or an organic solvent, thereby obtaining a graphene oxide dispersion. Subsequently, this solution is mixed with the ionic liquid polymer, resulting in the graphene oxide-ionic liquid polymer.

As such, the case where graphene oxide is dispersed in water preferably uses a hydrophilic ionic liquid polymer, for example, an ionic liquid polymer having an anion such as [NO₃]⁻, Cl⁻, Br⁻, I⁻ or [CH₃SO₄]⁻ bound thereto. Also, the case where graphene oxide is dispersed in an organic solvent such as propylene carbonate preferably uses a hydrophobic ionic liquid polymer, for example an ionic liquid polymer having an anion such as [(CF₃SO₂)₂N]⁻, [(CF₃CF₂SO₂)₂N]⁻, [(CF₃SO₂)₃C]⁻, [CF₃CO₂]⁻, [CF₃OCFHCF₂SO₃]⁻, [CF₃CF₂OCFHCF₂SO₃]⁻ or [CF₃CFHOCF₂CF₂SO₃]⁻ bound thereto.

Subsequently, the graphene oxide-ionic liquid polymer dispersion is reduced using a reducing agent such as hydrazine, hydroquinone, sodium borohydride or the like, or the dispersion is reduced using heat at 100 ∼ 300°C, thus manufacturing the poly(ionic liquid)-modified graphene.

In the course of manufacturing the poly(ionic liquid)-modified graphene by reducing graphene oxide in the present invention, the ionic liquid polymer is bound to graphene so that graphene is made stable, thereby preventing graphene from re-agglomerating during the reduction. Therefore, graphene of the poly(ionic liquid)-modified graphene may have a high specific surface area.

In addition, the method of using (ii) as above to manufacture the poly(ionic liquid)-modified graphene according to the present invention is described below. Specifically, expandable graphite having an acid intercalated between individual layers of graphite is thermally treated at high temperature, intercalated graphite having an alkali metal intercalated between individual layers of graphite is treated with microwaves, or graphite is electrochemically treated, thereby decreasing the interlayer attraction of graphite.

Then, the graphite thus treated is added to an ionic liquid monomer solution and dispersed, thus forming a graphene-ionic liquid monomer dispersion. As such, the ionic liquid monomer preferably contains a cation having a functional group that is able to induce the polymerization, and an anion including [BF₄]⁻, [PF₆]⁻, [CF₃SO₂)₂N]⁻ or [(CF₃CF₂SO₂)₂N]⁻ in order to effectively separate the poly(ionic liquid-modified graphene.

Then, the graphene-ionic liquid monomer solution is added with a polymerization initiator for polymerizing the ionic liquid and reacted, thus manufacturing the poly(ionic liquid)-modified graphene. The initiator for polymerizing the ionic liquid monomer may be one or more selected from among 2,2-azobisisobutyronitrile (AIBN), 1,1'-azobiscyclohexanecarbonitrile (ABCN) and benzoyl peroxide (BP).

The polymerization initiator may be used in an amount of 0.1 ∼ 3 parts by weight based on the amount of the ionic liquid, and the polymerization reaction may be carried out at 50 ∼ 80°C for about 5 ∼ 72 hr. If the amount of the initiator used in the reaction, the reaction temperature and the reaction time are less than the above lower limits, the reaction rate is too low or the reaction does not proceed well, making it difficult to perform the polymerization In contrast, if these exceed the above upper limits, the ionic liquid polymer may deteriorate or the solvent may excessively evaporate because the amount of the initiator is unnecessarily large, the reaction time is long or the reaction temperature is very high.

When the poly(ionic liquid)-modified graphene is manufactured by means of (i) or (ii), the weight average molecular weight of the ionic liquid polymer of the poly(ionic liquid)-modified graphene is preferably controlled to fall in the range of 1,000 ∼ 2,000,000 g/mol. If the molecular weight thereof is below 1,000 g/mol, long-term stability of the graphene dispersion undesirably becomes poor. In contrast, if the molecular weight thereof exceeds 2,000,000 g/mol, the molecular weight is too high and thus the solubility may undesirably decrease.

The poly(ionic liquid)-modified graphene composed of the graphene-ionic liquid polymer includes 5 ∼ 95 wt% of graphene and 5 ∼ 95 wt% of the ionic liquid polymer. If the amount of graphene is less than 5 wt%, electrical conductivity of the poly(ionic liquid)-modified graphene is very low, and the amount of graphene that is able to form an electric double layer with the electrolyte is too small, making it difficult to ensure sufficient capacitance. In contrast, if the amount of graphene exceeds 95 wt%, processibility of the poly(ionic liquid)-modified graphene may undesirably decrease.

Also in the poly(ionic liquid)-modified graphene according to the present invention, the anion bound to the ionic liquid polymer may be exchanged via a typical anion exchange reaction, thus easily changing the compatibility with an aqueous electrolyte, an organic solvent electrolyte or an ionic liquid electrolyte. For example, the case where Cl⁻, Br⁻, [NO₃]⁻ or [CH₃SO₄]⁻ is bound as the anion of the ionic liquid polymer of the poly(ionic liquid)-modified graphene may result in high compatibility with an aqueous electrolyte. When this is subjected to anion exchange so that [BF₄]⁻, [PF₆]⁻, [CF₃SO₂)₂N]⁻ or [(CF₃CF₂SO₂)₂N]⁻ is bound, compatibility with an organic solvent electrolyte may become superior.

The poly(ionic liquid)-modified graphene according to the present invention is obtained in the form of a slurry via a procedure such as filtering or the like, and thus may be utilized for a variety of electrochemical devices.

As such, in order to compensate for mechanical properties or other electrical properties of the poly(ionic liquid)-modified graphene, an additional organic/inorganic material, for example, a binder, a carbon material, metal particles, and an electrical conductive polymer may be selectively used.

Examples of the binder may include polyperfluorosulfonic acid (Nafion), polytetrafluoroethylene, polyvinylidene fluoride copolymer, etc., and examples of the carbon material may include activated carbon, graphite, carbon black, carbon nanotubes, fullerene, etc., and examples of the electrical conductive polymer may include polyaniline, polypyrrole, polythiophene and derivatives thereof.

Typically, the amount of the binder is 1 ∼ 20 wt% based on the amount of graphene. If the amount of the binder is less than 1 wt%, compensation effects of mechanical properties may become insignificant. In contrast, if the amount thereof exceeds 20 wt%, performance of an electrochemical device may deteriorate because an excess of the binder which is an electrical insulator is added Here, the electrochemical device may include a variety of devices, such as a battery, a fuel cell, a capacitor or a device formed of a combination thereof, a supercapacitor, an ultracapacitor or an electric double-layer capacitor. Specifically, it may be employed in various electrochemical devices so as to further increase capacitance compared to conventional cases.

The following examples will describe the aforementioned contents in more detail. However, the scope of the present invention is not limited to these examples.

### <Example 12>

Graphite (SP-1, available from Bay Carbon) was subjected to acid treatment using the Hummer method (Hummers W, Offeman R., "Preparation of graphite oxide", Journal of the American Chemical Society, 80, 1958, 1339), thus preparing graphite oxide, which was then stirred for about 30 min in water, thus obtaining an aqueous dispersion in which 1.0 mg/ml graphene oxide was dispersed.

20 ml of the graphene oxide aqueous dispersion was mixed with 100 mg of poly(1-vinyl-3-ethylimidazolium)bromide as an ionic liquid polymer and stirred, thus obtaining a graphene oxide-ionic liquid polymer. Subsequently, the graphene oxide-ionic liquid polymer was reduced at about 90°C for 1 hr using 6.4 mmol hydrazine hydrate as a reducing agent, thereby manufacturing a poly(ionic liquid)-modified graphene.

### <Comparative Example 3>

Comparative Example 1 was made in the same manner as was Example 12, with the exception that graphene obtained via the reduction reaction without the use of an ionic liquid polymer was mixed with 3 wt% of polytetrafluoroethylene as a binder.

### <Example 13>

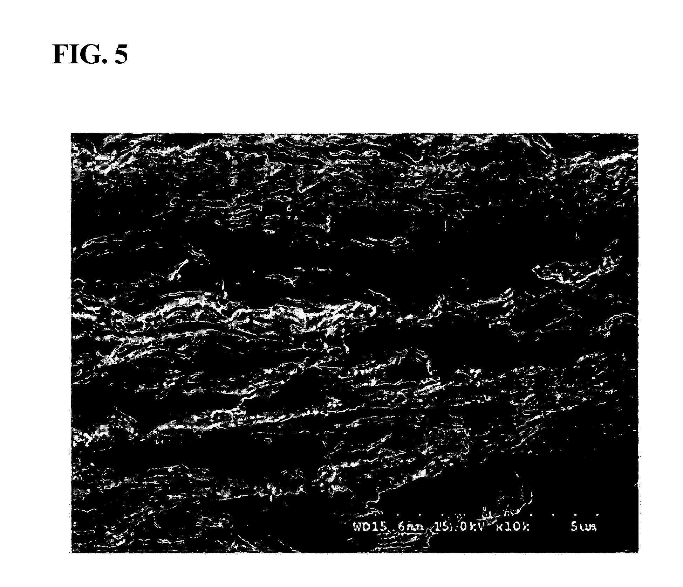

The graphite oxide prepared using acid treatment of Example 12 was added to propylene carbonate which is an organic solvent and then dispersed therein using ultrasonic waves, thus obtaining a solution in which 1.0 mg/ml graphite oxide was dispersed in the organic solvent 20 ml of this solution was mixed with 50 mg ml poly(1-vinyl-3-ethylimidazolium) bis(trifluoromethyl)sulfonylamide as an ionic liquid polymer and stirred, thus obtaining a graphene oxide-ionic liquid polymer. The solution was heated to 150°C to allow it to react for 1 hr, yielding a poly(ionic liquid)-modified graphene. The poly(ionic liquid)-modified graphene of Example 13 was observed using SEM. The results are illustrated in FIG. 5.

### <Comparative Example 4>

Comparative Example 4 was made in the same manner as was Example 13, with the exception that graphene was manufactured without using the ionic liquid polymer.

### <Example 14>

Expandable graphite (available from Grafguard) wherein H₂SO₄ and HNO₃ were intercalated between individual layers of graphite was thermally treated at 1,000°C for 1 min, after which 1 mg of the graphite thus treated was added to 3 g of 1-vinyl-3-ethylimidazolium hexafluorophosphate as an ionic liquid, ground using a mortar, and then dispersed for 30 min using ultrasonic waves, thus forming a graphene-ionic liquid monomer. Subsequently, the graphene-ionic liquid monomer was added with 0.03 g of 2,2-azobisisobutyronitrile (AIBN) as a polymerization initiator and reacted at 65°C for 6 hr, yielding a poly(ionic liquid)-modified graphene.

In the method of manufacturing the graphene dispersion, the poly(ionic liquid)-modified graphene manufactured using the grapheme dispersion and the manufacturing method thereof according to the present invention, the poly(ionic liquid)-modified graphene can then be manufactured by using the graphene dispersion prepared by dispersing graphite in the ionic liquid

The poly(ionic liquid)-modified graphene can be effectively used as an electrode material of an electrochemical device such as a supercapacitor or an electric double-layer.

The construction and the operation of the present invention have been disclosed using the aforementioned description and the drawings, but are merely illustrative, and may be variously modified and altered within the scope of the present invention.

## Claims

1. A graphene dispersion, obtained by a process comprising exfoliating graphite with ionic liquid and/or polyionic liquid

2. The graphene dispersion of claim 1, wherein the graphite is pristine graphite, graphite subjected to oxidation-reduction treatment, expanded graphite subjected to thermal treatment at high temperature, or graphite subjected to a combination of these treatments.

3. The graphene dispersion of claim 1 or 2, wherein the dispersion is performed using stirring, and the ionic liquid is provided in a form of a monomer or a polymer as a compound composed of a combination of cation and anion components, and these components are used alone or in mixtures of two or more.

4. The graphene dispersion of any one of claims 1 to 3, wherein the ionic liquid includes either one or both of a cation and an anion, the cation being any one selected from the following group represented by Formula 1 below: 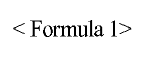 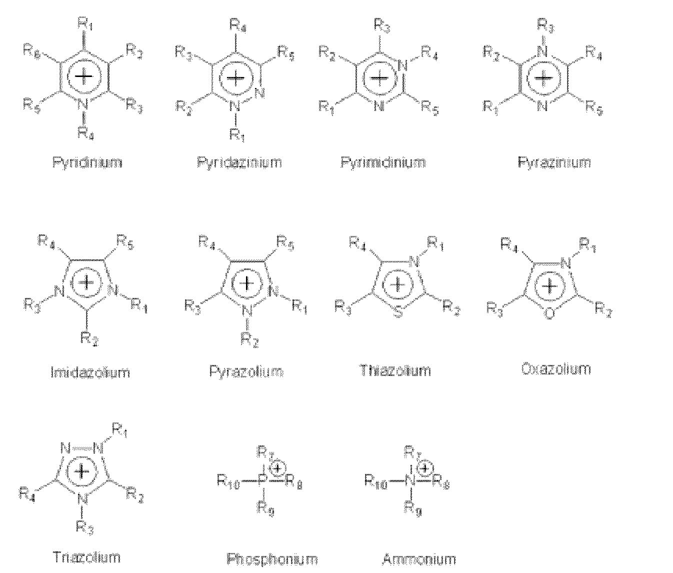 (wherein R₁ to R₁₀ are independently any one selected from among i) hydrogen, ii) halogen and iii) C₁-C₂₅ alkyl, alkenyl, alkynyl, benzyl, and phenyl, which may contain a heterogeneous element including O, N, Si and/or S, and may optionally contain Cl, Br, F, I, OH, NH₂ and/or SH), and the anion being any one selected from among [CH₃CO₂]⁻, [HSO₄]⁻, [CH₃OSO₃]⁻, [C₂H₅OSO₃]⁻, [AlCl₄]⁻, [CO₃]₂⁻, [HCO₃]⁻, [NO₂]⁻, [NO₃]⁻, [SO₄]₂⁻, [PO₄]₃⁻, [HPO₄]₂⁻, [H₂PO₄]⁻, [HSO₃]⁻, [CuCl₂]⁻, Cl⁻, Br⁻, I⁻, [BF₄]⁻, [PF₆]⁻, [SbF₆]⁻, [CF₃SO₃]⁻, [HCF₂CF₂SO₃]⁻, [CF₃HFCCF₂SO₃]⁻, [HCClFCF₂SO₃]⁻, [(CF₃SO₂)₂N]⁻, [(CF₃CF₂SO₂)₂N]⁻, [(CF₃SO₂)₃C]⁻, [CF₃CO₂]⁻, [CF₃OCFHCF₂SO₃]⁻, [CF₃CF₂OCFHCF₂SO₃]⁻ and [CF₃CFHOCF₂CF₂SO₃]⁻.

5. The graphene dispersion of any one of claims 1 to 4, wherein when the ionic liquid is a polymer, a molecular weight thereof is 1,000 ∼ 2,000,000 g/mol.

6. The graphene dispersion of any one of claims 1 to 5, wherein a polymerization initiator is added to the dispersion, so that the ionic liquid is polymerized.

7. The graphene dispersion of any one of claims 1 to 6, wherein the anion component of the ionic liquid of the dispersion is ion exchanged to change a solvent system.

8. The graphene dispersion of any one of claims 1 to 7, wherein in order to facilitate ion exchange of the anion component of the ionic liquid, a solvent including propylene carbonate, 1-methylpyrrolidone, dimethylformamide, acetonitrile, nitromethane, acetone or tetrahydrofuran is further added to a graphene dispersion product in a gel phase.

9. The graphene dispersion of any one of claims 1 to 8, wherein the ionic liquid is added in an amount equal to or more than a weight of the graphene oxide.

10. A poly(ionic liquid)-modified graphene, comprising graphene and an poly(ionic liquid) bound to the graphene.

11. The poly(ionic liquid)-modified graphene of claim 10, wherein when the ionic liquid of the graphene dispersion of any one of claims 1 to 9 is a monomer, the ionic liquid is polymerized before use, or when the ionic liquid thereof is a polymer, the ionic liquid is used as it is, thus manufacturing the poly(ionic liquid)-modified graphene.

12. The poly(ionic liquid)-modified graphene of claim 10 or 11, comprising 5 ∼ 95 wt% of the graphene and 5 ∼ 95 wt% of the ionic liquid polymer.

13. The poly(ionic liquid)-modified graphene of claim 11 or 12, wherein a polymerization initiator for polymerizing the ionic liquid is one or more selected from among 2,2-azobisisobutyronitrile (AIBN), 1,1-azobiscyclohexanecarbonitirle (ABCN) and benzoyl peroxide (BP).

14. The poly(ionic liquid)-modified graphene of any one of claims 11 to 13, wherein the polymerization initiator is used in an amount of 0.1 ∼ 3 parts by weight based on 100 parts by weight of the ionic liquid.

15. The poly(ionic liquid)-modified graphene of any one of claims 10 to 14, wherein the poly(ionic liquid)-modified graphene further comprises one or more selected from among a binder, a carbon material, metal particles and an electrical conductive polymer.

16. The poly(ionic liquid)-modified graphene of claim 15, wherein the binder is any one selected from among polyperfluorosulfonic acid, polytetrafluoroethylene and a polyvinylidene fluoride copolymer,
the carbon material is one or more selected from among activated carbon, graphite, carbon black, carbon nanotubes and fullerene, and
the electrical conductive polymer is one or more selected from among polyaniline, polypyrrole, polythiophene and derivatives thereof.

17. A method of manufacturing the graphene dispersion of claims 1 to 9, comprising
oxidizing graphite, thus preparing graphene oxide;
exfoliating and dispersing the graphene oxide in a solvent and then adding an ionic liquid thereto, or directly adding an ionic liquid to the graphene oxide, thus preparing a graphene dispersion; and
reducing the dispersion by heating to a temperature of 100°C or more or using a reducing agent

18. A method of manufacturing the graphene dispersion of claims 1 to 9, comprising:
thermally treating expandable graphite at high temperature, microwave-treating intercalated graphite in which an alkali metal is intercalated between individual layers of graphite or electrochemically treating graphite, and then exfoliating the treated graphite with an ionic liquid.

19. A method of manufacturing a poly(ionic liquid)-modified graphene, in which when the ionic liquid of the graphene dispersion in the method of claim 17 or 18 is a monomer, the ionic liquid is polymerized before use, or when the ionic liquid thereof is a polymer, the ionic liquid is used as it is, thus manufacturing the poly(ionic liquid)-modified graphene.
